# EUROPÄISCHE PATENTANMELDUNG

(11) **EP 1 906 138 A2**
(43) Veröffentlichungstag der Anmeldung: **02.04.2008**
(21) Anmeldenummer: 07024820.8
(22) Anmeldetag: 07.12.2005
(51) Int. Cl.: G01B 11/16, G01S 17/66, G01C 11/00

(54) **Automatische Bauteilprüfung**

(30) Priorität: 20.12.2004 DE 102004061338
(62) Teilanmeldung aus: 05026724.4
(71) Anmelder: Steinbichler Optotechnik GmbH, 83115 Neubeuern (DE)
(72) Erfinder: Steinbichler, Marcus, 83115 Neubeuern (DE); Berger, Roman, 83530 Schnaitsee (DE); Collrep, Jörg, 83059 Kolbermoor (DE); Huber, Rainer, 83451 Piding (DE)
(74) Vertreter: Zinnecker, Armin

(57) **Zusammenfassung**

Bei einem Verfahren zum Prüfen eines Bauteils wird das Bauteil mit einem Prüfsensor, dessen Position erfaßt wird, geprüft. Die vom Prüfsensor ermittelten Prüfergebnisse werden den zugehörigen Orten am bzw. im zu prüfenden Bauteil zugeordnet. Die 3D-Konturdaten des Bauteils werden mittels eines Digitalisierungssystems erfaßt. Die Vorrichtung zur Prüfung eines Bauteils umfaßt eine Sensoreinheit und ein Trackingsystem zur Erfassung der Position der Sensoreinheit. Die Sensoreinheit umfaßt einen Prüfsensor zur Prüfung des Bauteils. Die Vorrichtung weist ein Digitalisierungssystem zur Erfassung der 3D-Konturdaten des Bauteils auf.

## Beschreibung

Die Erfindung betrifft ein Verfahren zum Prüfen eines Bauteils sowie eine Vorrichtung zur Ausführung des Verfahrens.

Vorbekannt sind verschiedene Verfahren zur Prüfung von Bauteilen. Mit den vorbekannten Verfahren kann die Bauteilstruktur oder die Bauteiloberfläche beispielsweise auf Schäden oder Inhomogenitäten untersucht bzw. geprüft werden. Beispielsweise beschreibt die EP-1 284 409 A1 ein scherografisches Prüfverfahren, bei dem unterschiedliche Belastungszustände des Bauteils interferometrisch vermessen werden. Die unterschiedlichen Belastungszustände können durch Wärmebestrahlung hergestellt werden. In den unterschiedlichen Belastungszuständen werden mit einer Kamera interferometrische Abbildungen aufgezeichnet. Durch Subtraktion der Interferogramme können Unregelmäßigkeiten der Bauteilstruktur visualisiert werden. Neben scherografischen Prüfverfahren sind andere interferometrische Prüfverfahren und Speckle-Prüfverfahren bekannt, z. B. ESPI (Electronic Speckle Pattern Interferometry) oder digitale Speckle-Fotografie. Weitere bekannte Verfahren zur Bauteilprüfung sind Streifenprojektions-, Laserscan-, Linienscan-, Moire-, Weißlicht- (Weißlichtinterferometrie, Gitterverfahren), Ultraschall-, Wirbelstrom-, Röntgen- und Thermografieverfahren.

Ein Nachteil der vorbekannten Prüfverfahren besteht darin, daß in einer bestimmten Position des Prüfsensors, d. h. in einer Einzelmessung, nur ein Einzelabschnitt des Bauteils geprüft werden kann. Komplexe bzw. große Bauteile müssen daher mittels eines festgelegten Prüfplans in mehreren Einzelprüfungen untersucht werden. Dabei ist es schwierig, den Prüfplan ohne Markierungen auf dem Bauteil abzuarbeiten. Weiterhin ist eine genaue Positionierung des Prüfsensors nur schwer möglich, da der Sensor von Hand positioniert werden muß. Deswegen müssen die mit Einzelmessungen abgedeckten Einzelabschnitte vergleichsweise große Überlappbereiche aufweisen, damit eine lückenlose Bauteilprüfung gewährleistet ist.

Weiterhin besteht bei den vorgenannten Verfahren das Problem, daß die Prüfergebnisse der Einzelmessungen zu einem Gesamtprüfergebnis zusammengesetzt werden müssen. Dazu muß die räumliche Lage des Prüfsensors bei den Einzelmessungen bekannt sein. Weiterhin muß die dreidimensionale geometrische Kontur (3D-Kontur) des Bauteils bekannt sein, damit die Prüfergebnisse den zugehörigen Orten in bzw. auf dem Bauteil zugeordnet werden können.

Zur Lösung dieses Problems schlägt die EP-1 284 409 A1 einen Prüfsensor vor, der mit einer raumfesten Zentraleinheit in definierter Weise mechanisch verkoppelt ist, damit die räumliche Lage des Prüfsensors relativ zur Zentraleinheit - und damit im raumfesten Koordinatensystem - stets bekannt ist. Unterschiedliche Prüfpositionen werden durch definierte Relativbewegungen des Prüfsensors angefahren, so daß über die definierten Relativbewegungen die räumliche Lage des Prüfsensors stets exakt angegeben werden kann. Diese Lösung hat allerdings den Nachteil, daß die feste mechanische Verkopplung des Prüfsensors mit der Zentraleinheit die Bewegungsfreiheit des Prüfsensors einschränkt. Es ist nicht bzw. nur mit hohem technischen Aufwand möglich, den Prüfsensor in beliebiger Weise auf dem Bauteil zu positionieren.

Vor diesem Hintergrund ist es Aufgabe der vorliegenden Erfindung, die vorbekannten Prüfverfahren zu verbessern. Weiterhin ist es Aufgabe der vorliegenden Erfindung, ein Prüfsystem zur Ausführung des erfindungsgemäßen Verfahrens vorzuschlagen. Insbesondere soll ein Verfahren und ein System vorgeschlagen werden, bei dem die Einzelmessungen ohne Markierungen auf dem Bauteil abgearbeitet werden können. Weiterhin soll mit dem erfindungsgemäßen Verfahren und System eine genauere Positionierung des Prüfsensors auf dem zu prüfenden Bauteil ermöglicht werden. Ferner soll es das erfindungsgemäße Verfahren ermöglichen, die Überlappbereiche verschiedener Einzelmessungen möglichst gering zu halten. Schließlich ist es Aufgabe der vorliegenden Erfindung, ein Prüfverfahren vorzuschlagen, bei dem die räumliche Lage des Prüfsensors auch ohne mechanische Verkopplung mit einer raumfesten Zentraleinheit angegeben werden kann.

Erfindungsgemäß wird die Aufgabe gelöst durch ein Verfahren nach Anspruch 1 sowie eine Vorrichtung nach Anspruch 18. Vorteilhafte Ausgestaltungen ergeben sich aus den Unteransprüchen.

Anspruch 1 löst die Aufgabe erfindungsgemäß durch ein Verfahren zum Prüfen eines Bauteils, bei dem das Bauteil mit einem Prüfsensor, dessen Position erfaßt wird, geprüft wird. Durch die Erfassung der Position des Prüfsensors ist es möglich, die räumliche Lage des Prüfsensors in einem raumfesten Koordinatensystem jederzeit zu ermitteln. Diese Ermittlung erfolgt ohne definierte mechanische Verkopplung des Prüfsensors mit einer raumfesten Zentraleinheit. Durch die automatische Erfassung der Position des Prüfsensors kann auf eine Markierung der Prüfpositionen auf dem Bauteil verzichtet werden. Zudem ermöglicht die Erfassung der Position des Prüfsensors die Zuordnung der Prüfergebnisse zu den zugehörigen Orten bzw. auf dem Bauteil. Weiterhin erlaubt die Erfassung der Position des Prüfsensors die Zusammensetzung der Prüfergebnisse von Einzelmessungen zu einem Gesamt-Prüfergebnis.

In einer bevorzugten Ausgestaltung des Verfahrens werden die erfaßten Positionen des Prüfsensors dokumentiert und/oder abgespeichert. Dies erleichtert die Zusammensetzung der Prüfergebnisse von Einzelmessungen zu einem Gesamt-Prüfergebnis. Weiterhin wird die Zuordnung der Prüfergebnisse zu den zugehörigen Orten im bzw. auf dem Bauteil erleichtert. Schließlich vereinfacht die Dokumentation bzw. Abspeicherung der erfaßten Positionen des Prüfsensors die Verarbeitung und Auswertung der Prüfergebnisse, insbesondere im Wege der elektronischen Datenverarbeitung. So kann insbesondere die elektronische Visualisierung der Prüfergebnisse einfacher erreicht werden.

In einer weiter bevorzugten Ausgestaltung des Verfahrens wird die Position des Prüfsensors mit einem Trackingsystem erfaßt. Bei einem Trackingsystem handelt es sich um ein System, mit dem die Lage eines Gegenstandes im Raum berührungslos, insbesondere ohne definierte mechanische Verkopplung zu einer raumfesten Zentraleinheit, erfaßt werden kann. Durch die Kombination des Prüfsensors mit einem derartigen Trackingsystem wird der Vorteil erreicht, daß der Prüfsensor in beliebiger Weise auf dem Bauteil bewegt werden kann und gleichzeitig ohne großen technischen Aufwand seine Position erfaßt werden kann. Damit gewährleistet die erfindungsgemäße Kombination von Prüfsensor und Trackingsystem die gewünschte Bewegungsfreiheit des Prüfsensors.

In einer bevorzugten Ausgestaltung ist das Trackingsystem als Triangulations-Trackingsystem ausgebildet. Ein solches Trackingsystem umfaßt vorteilhafterweise eine raumfeste Basiseinheit mit mindestens zwei voneinander beabstandeten Sensoren, insbesondere Kameras. Weiterer Bestandteil des bevorzugten Triangulations-Trackingsystems sind mindestens drei Marken, die an dem Gegenstand, dessen räumliche Lage erfaßt werden soll, beabstandet angebracht sind. Die Sensoren und Marken sind derart ausgestaltet, daß die Marken von den Sensoren in der Basiseinheit detektiert werden können. Bei den Marken kann es sich um passive Elemente, insbesondere Reflektoren, und/oder um aktive Elemente, sogenannte Aktoren, handeln. Derartige Aktoren senden Signale aus, die von den Sensoren der Basiseinheit des Triangulations-Trackingsystems empfangen werden können. Als Aktoren können beispielsweise Leuchtdioden verwendet werden, die optische Signale aussenden, oder auch elektromagnetische Sender. Um die Position des Gegenstandes in jeder räumlichen Lage erfassen zu können, müssen stets mindestens drei der auf dem Gegenstand angebrachten Marken von der Basiseinheit detektierbar sein. Dadurch ist gewährleistet, daß in jeder räumlichen Lage des Gegenstandes von den beiden beabstandeten Sensoren der Basiseinheit Signale von mindestens drei Marken detektiert werden können. Anhand der detektierten Signale können im Wege der Triangulation die dreidimensionalen Raumkoordinaten der mindestens drei Aktoren ermittelt werden. Damit kann die Lage des Gegenstandes im raumfesten Koordinatensystem des Triangulations-Trackingsystems angegeben werden.

In anderen vorteilhaften Ausgestaltungen kann als Trackingsystem ein GPS-Trackingsystem, ein Laser-Trackingsystem oder ein photogrammetrisches Trakkingsystem verwendet werden.

In einer möglichen Ausgestaltung umfaßt das GPS-Trackingsystem mindestens drei voneinander beabstandete Transmitter, deren räumliche Lage im raumfesten Koordinatensystem bekannt ist. Vorzugsweise handelt es sich bei den Transmittern um Satelliten oder Sender mit raumfester Lage. Weiterhin umfaßt das bevorzugte GPS-Trackingsystem mindestens drei Empfänger, die an dem Gegenstand, dessen räumliche Lage ermittelt werden soll, vorliegend also an dem Prüfsensor, beabstandet angebracht sind. Vorteilhafterweise können in jeder in Betracht kommenden Lage des Prüfsensors mindestens drei der am Prüfsensor angebrachten Empfänger Signale von mindestens drei Transmittern empfangen. Die räumliche Lage eines Empfängers, der Signale von mindestens drei Transmittern empfängt, kann nach bekannten Verfahren ermittelt werden. Wird auf diese Weise, nacheinander oder gleichzeitig, die räumliche Lage von mindestens drei Empfängern ermittelt, so kann auf dieser Grundlage die räumliche Lage des Prüfsensors angegeben werden. Alternativ kann die räumliche Lage des Prüfsensors mit nur einem Empfänger ermittelt werden. Dann wird der Empfänger an mindestens drei voneinander beabstandeten und bekannten Punkten auf dem Prüfsensor plaziert. Die Raumkoordinaten der Punkte, an denen der Empfänger plaziert worden ist, können dann nach bekannten Verfahren ermittelt werden.

In einer möglichen Ausgestaltung umfaßt ein Laser-Trackingsystem einen raumfesten Laser zur Erzeugung eines Laserstrahles sowie ein raumfestes Interferometer. Weiterhin umfaßt das Laser-Trackingsystem einen Reflektor, der an dem Gegenstand, dessen räumliche Lage bestimmt werden soll, vorliegend also am Prüfsensor, angebracht ist. Zur Bestimmung der räumlichen Lage des Prüfsensors wird der Laserstrahl vom Reflektor in das Interferometer reflektiert und mit diesem ausgewertet. Diese Auswertung ermöglicht die Ermittlung von Änderungen des Abstandes des Reflektors vom Interferometer. Der absolute Abstand des Reflektors wird nach bekannten Verfahren, beispielsweise durch eine Messung der Lichtlaufzeit, ermittelt. Auf diese Weise wird mit den Komponenten Laser, Reflektor und Interferometer der Abstand des Reflektors vom Interferometer erfaßt. Bei Bewegung des Prüfsensors, beispielsweise beim Navigieren des Prüfsensors über das Bauteil, wird der Laserstrahl und das Interferometer nach einem bekannten Verfahren automatisch nachgeführt, so daß der Laserstrahl den Reflektor stets trifft und mit dem Interferometer stets ein Reflex erfaßt werden kann. Die für die Nachführung von Laserstrahl und Interferometer erforderlichen Verschwenkungen werden durch Messung der Verschwenkungswinkel erfaßt. Durch die Kombination der gemessen Abstandsänderung mit den gemessenen Winkeländerungen kann die Translation des Reflektors bei einer Verschiebung des Prüfsensors in drei Dimensionen bestimmt werden, so daß die absolute räumliche Lage des Reflektors in allen drei Raumkoordinaten bestimmt werden kann. Zur Bestimmung der räumlichen Lage des Prüfsensors müssen die Raumkoordinaten von mindestens drei beabstandeten Punkten auf dem Prüfsensor bekannt sein. Dies kann dadurch erreicht werden, daß der Reflektor an drei voneinander beabstandete und bekannte Punkte des Prüfsensors verschoben wird, und an jedem dieser Punkte die vorbeschriebene Bestimmung der Raumkoordinaten des Reflektors vorgenommen wird. In einer Variante wird der Reflektor nicht verschoben, sondern stationär an einem bekannten Punkt des Prüfsensors angebracht. Das Laser-Trackingsystem umfaßt in dieser Variante zusätzlich ein Kamerasystem sowie mindestens zwei am Prüfsensor beabstandet angebrachte Marken, die vom Kamerasystem detektiert werden können. Bei den Marken Elemente, sogenannte Aktoren, handeln. Auf der Grundlage der vom Kamerasystem detektierten Signale kann dann wie beim Triangulations-Trackingsystem im Wege der Triangulation die räumliche Lage der beiden Marken ermittelt werden. Auf diese Weise ist die dreidimensionale räumliche Lage des Prüfsensors durch Ermittlung der Raum-Koordinaten von drei beabstandeten und bekannten Punkten auf dem Prüfsensor mit Hilfe des Laser-Trackingsystems bestimmt.

In einer möglichen Ausgestaltung umfaßt ein photogrammetrisches Trackingsystem mindestens eine Kamera. Bei einem photogrammetrischen Trackingsystem muß das zu prüfende Bauteil mit dem Prüfsensor aus mindestens zwei verschiedenen Positionen aufgenommen werden. Umfaßt das photogrammetrische Trackingsystem nur eine Kamera, so muß deren Position verändert werden, um Bilder aus verschiedenen Kamerapositionen zu erhalten. Umfaßt das Trackingsystem mehrere Kameras, so können die Bilder aus verschiedenen Positionen durch die geeignet positionierten Kameras erzeugt werden. Weiterhin umfaßt das photogrammetrische Trackingsystem mindestens drei raumfesten Marken, die während der gesamten Messung raumfest bleiben, und deren gegenseitiger Abstand bekannt ist. Die mindestens drei raumfesten Marken müssen sich in beiden Kamerapositionen im Meßfeld der Kamera befinden. Die mindestens drei raumfesten Marken dienen der Kalibrierung des photogrammetrischen Trackingsystems. Vorteilhafterweise können die mindestens drei raumfesten Marken an Punkten des zu prüfenden Bauteils angebracht werden, deren relative räumliche Lage bekannt ist. In einer anderen vorteilhaften Ausgestaltung können als raumfeste Marken auch markante Objektpunkte des zu prüfenden Bauteils bzw. des Prüfsensors verwendet werden. Zur Ermittlung der räumlichen Lage des Prüfsensors wird mit der Kamera von den beiden Kamerapositionen aus ein Bild des zu prüfenden Bauteils mit dem darauf befindlichen Prüfsensor aufgenommen. Im Wege der bekannten photogrammetrischen Auswertung der aufgenommenen Bilder wird die dreidimensionale räumliche Lage des Prüfsensors ermittelt.

Die vorbeschriebenen Trackingsysteme werden gemäß bevorzugten Ausgestaltungen des erfindungsgemäßen Verfahrens zur Erfassung der Position des Prüfsensors verwendet. Auf diese Weise kann die Position des Prüfsensors jederzeit berührungslos erfaßt werden, d. h. ohne eine körperliche Verbindung zwischen dem Prüfsensor und einer raumfesten Zentraleinheit bzw. ohne feste mechanische Verkopplung mit einer raumfesten Zentraleinheit. So kann beispielsweise darauf verzichtet werden, den Prüfsensor über gelenkig verbundene und gegebenenfalls teleskopierbare Schwenkarme, die definiert verstellt werden können, mit einer raumfesten Zentraleinheit zu verbinden. Das erfindungsgemäße Verfahren ermöglicht also den Verzicht auf eine aufwendige und exakte Mechanik zur Positionierung des Prüfsensors. Die erfindungsgemäße Ausgestaltung erlaubt eine sehr freie Bewegung des Prüfsensors auf dem zu prüfenden Bauteil.

In einer weiter bevorzugten Ausgestaltung des Verfahrens, wird das Trackingsystem zum Positionieren und/oder Navigieren des Prüfsensors auf dem Bauteil verwendet. Dies kann beispielsweise dadurch erreicht werden, daß die vom Trackingsystem aktuell erfaßte Position des Prüfsensors auf einem Display angezeigt wird, so daß der Bediener des Systems die aktuelle Position des Prüfsensors jederzeit ablesen kann. Dadurch kann der Prüfsensor besonders leicht in eine gewünschte Position gebracht werden. Weiterhin kann der Prüfsensor leicht nach einem vorgegebenen Prüfplan über das Bauteil navigiert werden, so daß der Prüfplan in komfortabler Weise abgearbeitet werden kann.

Eine weiter bevorzugte Ausgestaltung des Verfahrens sieht vor, zur Prüfung des Bauteils mehrere Einzelmessungen mit dem Prüfsensor vorzunehmen. Für jede dieser Einzelmessungen wird der Prüfsensor positioniert, beispielsweise in dem die vom Trackingsystem erfaßte Ist-Position mit der gewünschten Soll-Position abgeglichen wird. Ist die gewünschte Position erreicht, so wird die vorgesehene Einzelmessung durchgeführt. Diese Ausgestaltung des Verfahrens erlaubt es, größere Bereiche des Bauteils oder das ganze Bauteil schrittweise zu prüfen.

Bevorzugterweise kann für das erfindungsgemäße Verfahren ein punktueller Prüfsensor, insbesondere ein Ultraschallsensor, verwendet werden. In dieser Ausgestaltung können größere Prüfbereiche durch Abrastern mit dem punktuellen Prüfsensor untersucht werden.

In einer anderen bevorzugten Ausgestaltung wird als Prüfsensor ein flächenhafter Prüfsensor, insbesondere ein Thermografie- oder Scherografiesensor, verwendet. Mit derartigen Prüfsensoren kann bei einer Einzelmessung ein flächenhafter Einzelabschnitt des Bauteils geprüft werden.

Vorteilhafterweise werden die mit dem Prüfsensor ermittelten Prüfergebnisse den zugehörigen Orten am bzw. im zu prüfenden Bauteil zugeordnet. Durch diese Ausgestaltung kann mit dem erfindungsgemäßen Prüfverfahren ein ortsaufgelöstes Prüfergebnis zur Verfügung gestellt werden. Beispielsweise können auf diese Weise ortsaufgelöste Strukturinformationen über das Bauteil ausgegeben werden. Insbesondere kann einem solchen ortsaufgelösten Prüfergebnis entnommen werden, an welchen Stellen des Bauteils die Ist-Beschaffenheit von der Soll-Beschaffenheit abweicht.

Gemäß einer weiteren Verbesserung des Verfahrens werden die 3D-Konturdaten des Bauteils eingelesen. Die 3D-Konturdaten beschreiben die dreidimensionale geometrische Kontur des Bauteils. Diese 3D-Konturdaten können beispielsweise aus den CAD-Konstruktionsdaten des Bauteiles gewonnen sein. Weiter vorteilhaft ist die Ermittlung der Lage des Bauteils im raumfesten Koordinatensystem des Trackingsystems. Dazu muß der Prüfsensor an mehreren verschiedenen Orten auf dem Bauteil positioniert werden, und an jeder Position muß mittels des Trackingsystems die Position erfaßt werden. Auf Grundlage der erfaßten Positionen des Prüfsensors und aufgrund der durch die Geometrie des Prüfsensors definierten relativen Lage des Prüfsensors zum Bauteil kann die Lage des Bauteils im raumfesten Koordinatensystem der Basiseinheit des Trackingsystems ermittelt werden. Die 3D-Konturdaten des Bauteils und seine räumliche Lage erlauben, die vom Prüfsensor ermittelten Prüfergebnisse den zugehörigen Orten am bzw. im Bauteil zuzuordnen.

In einer anderen bevorzugten Ausgestaltung werden die 3D-Konturdaten des Bauteils mittels eines Digitalisierungssystems digital erfaßt. Eine solche Digitalisierung kann beispielsweise erforderlich sein, wenn die 3D-Konturdaten nicht anderweitig zur Verfügung stehen, beispielsweise in Form von CAD-Konstruktionsdaten.

Vorteilhafterweise wird die digitale Erfassung der 3D-Konturdaten im Wege des Streifenprojektionsverfahrens vorgenommen. Weiter vorteilhaft kann das Digitalisierungssystem mit dem Prüfsensor zu einer kompakten Sensoreinheit kombiniert werden. In anderen Varianten des erfindungsgemäßen Verfahrens kann die Digitalisierung auch im Wege des Triangulations-, Linienscan-, Laserscan- (mit unterschiedlichen Wellenlängen), Gitter-, Photogrammetrie- oder Ultraschallverfahren vorgenommen werden.

In einer weiter bevorzugten Ausgestaltung der Erfindung wird die Prüfung des Bauteils im Scherografieverfahren vorgenommen. Dann kann für Scherografie- und Streifenprojektionsverfahren dieselbe Kamera verwendet werden. Dadurch können die Kosten des Prüfverfahrens durch eine kostengünstigere Prüfapparatur gesenkt werden.

In einer anderen vorteilhaften Ausgestaltung des Verfahrens werden die Prüfergebnisse von Einzelmessungen unter Eliminierung von Überlappbereichen zu einem Gesamt-Prüfergebnis zusammengesetzt. Wenn ein größerer Bereich des Bauteils geprüft werden soll, wird das Bauteil vorteilhafterweise in mehren Einzelmessungen abgerastert. Bei diesen Einzelmessungen erhält man als Prüfergebnis jeweils einzelne Prüfabschnitte. Um den gesamten untersuchten Bereich abzudecken, müssen sich die einzelnen Prüfabschnitte jeweils überlappen. Bei der Erzeugung eines Gesamt-Prüfergebnisses aus den Einzelmessungen ist es vorteilhaft, diese Überlappbereiche zu eliminieren. Dies kann insbesondere bei der Meßdatenverarbeitung im Wege der elektronischen Datenverarbeitung erfolgen.

In einer weiteren vorteilhaften Ausgestaltung der Erfindung, werden die Prüfergebnisse in einer Abbildung des Bauteils visualisiert. Dies kann insbesondere in einer im Wege der elektronischen Datenverarbeitung erzeugten Abbildung erfolgen. Einer solchen Abbildung kann der Nutzer des Verfahrens besonders leicht entnehmen, an welchen Stellen des Bauteils die Ist-Beschaffenheit von der Soll-Beschaffenheit abweicht.

Die Erfindung betrifft weiter eine Vorrichtung zur Ausführung des erfindungsgemäßen Verfahrens, d. h. eine Vorrichtung zur Prüfung eines Bauteils. Die erfindungsgemäße Vorrichtung umfaßt eine Sensoreinheit und ein Trackingsystem. Zur Überprüfung des Bauteils wird die Sensoreinheit auf dem Bauteil in geeigneter Weise positioniert und/oder navigiert. Die Position der Sensoreinheit wird mit dem Trakkingsystem erfaßt. Die Sensoreinheit umfaßt einen Prüfsensor zur Prüfung des Bauteils. Mit dieser Vorrichtung kann das erfindungsgemäße Verfahren ausgeführt werden, insbesondere kann das Bauteil unter Erfassung der Position des Prüfsensors geprüft werden.

In einer vorteilhaften Ausgestaltung ist das Trackingsystem als Triangulations-Trackingsystem ausgestaltet. Ein derartiges Trackingsystem umfaßt eine raumfeste Basiseinheit und Marken, die an der Sensoreinheit beabstandet angebracht sind. Die Bestimmung der Position der Sensoreinheit erfolgt vorzugsweise mit mindestens drei Marken. Bei den Marken kann es sich um passive Elemente, insbesondere Reflektoren, und/oder um aktive Elemente, sogenannte Aktoren, handeln. Derartige Aktoren sind mit Mitteln zum Aussenden von Signalen ausgestattet. Die Basiseinheit ist mit Mitteln zum Detektieren der von den Marken ausgehenden Signale ausgestattet. Die Basiseinheit weist vorzugsweise mindestens zwei beabstandete solcher Mittel zum Detektieren von Signalen auf. Vorzugsweise handelt es sich bei den Mitteln zum Detektieren der Signale um Sensoren bzw. Kameras. Zur Erfassung der Position der Sensoreinheit mit dem Triangulations-Trackingsystem detektieren die Sensoren der Basiseinheit Signale von den vorzugsweise mindestens drei beabstandeten Marken.

In anderen vorteilhaften Ausgestaltungen kann das Trackingsystem als GPS-Trackingsystem, Laser-Trackingsystem oder als photogrammetrisches Trackingsystem ausgebildet sein.

Bevorzugterweise kann als Prüfsensor ein Scherografie-, Thermografie oder Ultraschallsensor verwendet werden.

Vorteilhafterweise ist die für den des Scherografiesensor benötigte Belastungseinheit in die Sensoreinheit integriert. Als Belastungseinheit können beispielsweise Wärmestrahler, Ultraschallanreger oder eine Vakuumkammer verwendet werden.

Vorteilhafterweise umfaßt die Vorrichtung zur Prüfung eines Bauteils ein Digitalisierungssystem zur Ermittlung der 3D-Konturdaten des Bauteils. Diese Ausgestaltung erlaubt es, die 3D-Konturdaten des Bauteils simultan mit der Prüfung des Bauteils zu erfassen. Dies ist insbesondere dann vorteilhaft, wenn die 3D-Konturdaten nicht anderweitig zur Verfügung stehen. Weiter vorteilhaft ist es, wenn das Digitalisierungssystem in die Sensoreinheit integriert ist. Dadurch kann die erfindungsgemäße Vorrichtung besonders kompakt ausgestaltet werden, so daß sie nur aus zwei Hauptelementen besteht, nämlich der Basiseinheit des Trackingsystems und der Sensoreinheit. Dies erleichtert die Bedienung.

In einer weiter bevorzugten Ausgestaltung wird als Digitalisierungssystem ein Streifenprojektionssensor verwendet, der einen Streifenprojektor, eine Kamera und ein entsprechendes Meßdatenverarbeitungssystem umfaßt. Besonders vorteilhaft ist es, wenn der Scherografiesensor und der Streifenprojektionssensor die gleiche Kamera verwenden. Dann kann die erfindungsgemäße Vorrichtung besonders kostengünstig hergestellt werden.

Vorteilhafterweise umfaßt die Sensoreinheit eine Navigationshilfe, die mit dem Trackingsystem gekoppelt ist. Mit dieser Navigationshilfe kann die Sensoreinheit über die Oberfläche des Bauteils navigiert werden, so daß die Sensoreinheit besonders leicht an gewünschten Positionen positioniert werden kann. Die Navigationshilfe kann beispielsweise derart realisiert werden, daß auf einem Display die jeweils vom Trackingsystem erfaßte, aktuelle Position der Sensoreinheit angegeben wird. Die aktuell erfaßte Position kann auf dem Display grafisch oder numerisch in Raumkoordinaten angegeben werden. In einer anderen Ausgestaltung der Navigationshilfe kann die Abweichung der aktuell erfaßten Ist-Position von der gewünschten Soll-Position der Sensoreinheit angegeben werden.

Eine weitere Verbesserung der erfindungsgemäßen Vorrichtung umfaßt eine Datenverarbeitungseinheit, die die Prüfergebnisse des Prüfsensors den digitalisierten 3D-Konturdaten des Bauteils zuordnet. Mit dieser Datenverarbeitung können auch die einzelnen Prüfabschnitte zu einem Gesamt-Prüfergebnis zusammengesetzt werden. Ebenfalls kann durch die Datenverarbeitungseinheit die Eliminierung der Überlappbereiche erreicht werden. Schließlich kann mit der Datenverarbeitung das Gesamt-Prüfergebnis für den Nutzer visualisiert werden.

Ein Ausführungsbeispiel der Erfindung wird anhand der Figuren 1 bis 8 erläutert.
Dabei zeigt:
- Figur 1:: eine schematische Darstellung einer erfindungsgemäßen Vorrichtung zur Durchführung des erfindungsgemäßen Verfahrens mit einem punktuellen Prüfsensor und einem Triangulations-Trackingsystem;
- Figur 2:: eine schematische Darstellung einer erfindungsgemäßen Vorrichtung zur Durchführung des erfindungsgemäßen Verfahrens mit einem flächenhaften Prüfsensor und einem Triangulations-Trackingsystem;
- Figur 3:: eine Veranschaulichung eines bei einer Einzelmessung geprüften Einzelabschnitts des Bauteils;
- Figur 4:: eine Veranschaulichung von mehreren, in Einzelmessungen geprüften Einzelabschnitten und ihrer Überlappbereiche;
- Figur 5:: eine Veranschaulichung der Zusammensetzung der Einzelabschnitte zu einem Gesamtprüfbild unter Eliminierung der Überlappbereiche;
- Figur 6:: eine erfindungsgemäße Sensoreinheit mit Scherografiesensor und integriertem Digitalisierungssystem (Streifenprojektionssensor);
- Figur 7:: eine erfindungsgemäße Sensoreinheit mit Scherografiesensor und Streifenprojektionssensor mit gemeinsamer Kamera; und
- Figur 8:: eine Veranschaulichung der in Figur 7 gezeigten Sensoreinheit bei einer Scherografiemessung;
- Figur 9:: eine schematische Darstellung einer erfindungsgemäßen Vorrichtung zur Durchführung des erfindungsgemäßen Verfahrens mit einem flächenhaften Prüfsensor und einem GPS-Trackingsystem;
- Figur 10:: eine schematische Darstellung einer erfindungsgemäßen Vorrichtung zur Durchführung des erfindungsgemäßen Verfahrens mit einem flächenhaften Prüfsensor und einem Laser-Trackingsystem;
- Figur 11:: eine schematische Darstellung einer erfindungsgemäßen Vorrichtung zur Durchführung des erfindungsgemäßen Verfahrens mit einem flächenhaften Prüfsensor und einem photogrammetrischen Trackingsystem.

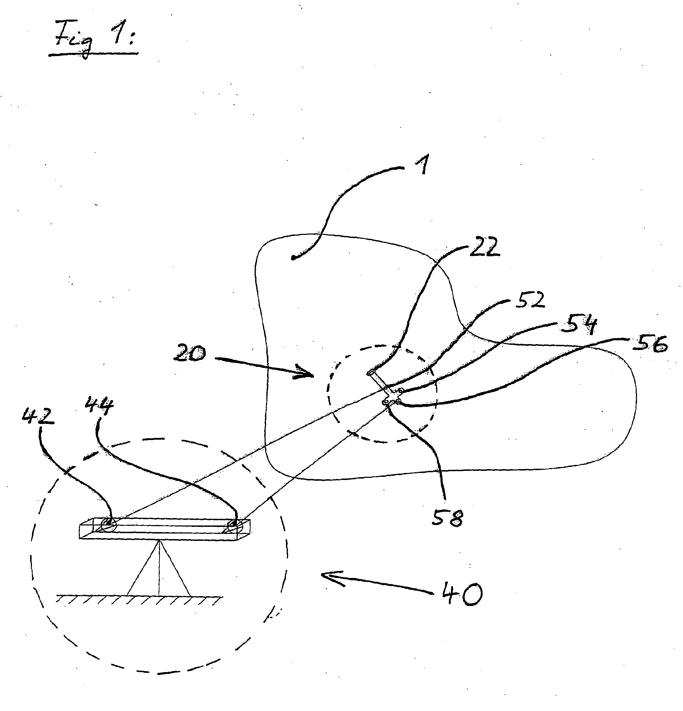

Figur 1 zeigt ein Bauteil 1 mit einer darauf positionierten Sensoreinheit 20 (im gestrichelten Kreis). In die Sensoreinheit 20 integriert ist ein punktueller Prüfsensor 22. Es kann sich dabei um einen Ultraschallsensor handeln. An der Sensoreinheit 20 sind beabstandete Aktoren 52, 54, 56, 58 des Triangulations-Trackingsystems angebracht. Weiterhin ist in Figur 1 die raumfeste Basiseinheit 40 des Triangulations-Trackingsystems gezeigt (im gestrichelten Kreis). Die Basiseinheit 40 des Triangulations-Trackingsystems umfaßt zwei Kameras 42 und 44, die voneinander beabstandet sind. Die Kameras 42 und 44 empfangen die von den Aktoren 52, 54, 56, 58 ausgesandten Signale. Aus den empfangenen Signalen, der bekannten räumlichen Lage der Kameras sowie der bekannten relativen Lage der Aktoren auf der Sensoreinheit kann die Lage der Sensoreinheit 20 und damit die Lage des Prüfsensors 22 im raumfesten Koordinatensystem der Basiseinheit 40 des Triangulations-Trackingsystems ermittelt werden.

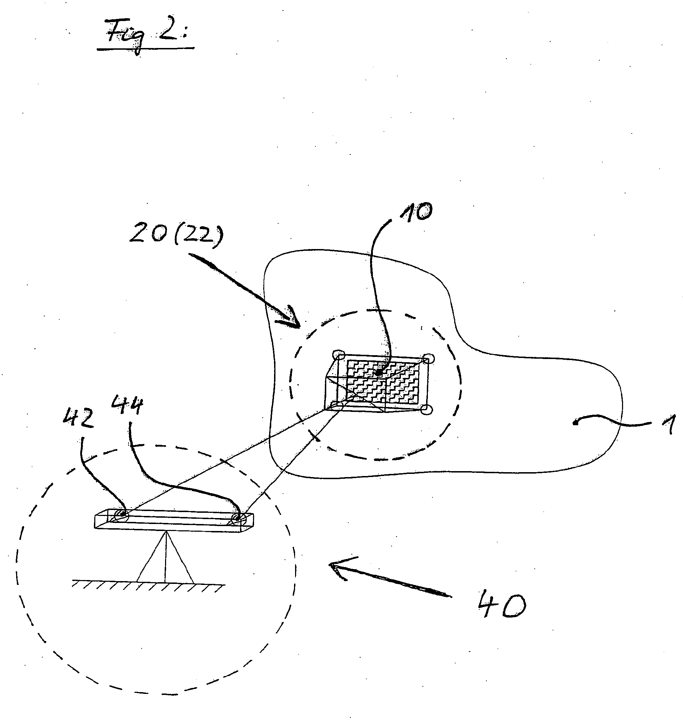

Figur 2 zeigt ein Bauteil 1 mit einer darauf positionierten Sensoreinheit 20 mit einem flächenhaften Prüfsensor 22. Dabei kann es sich um einen Scherografiesensor oder einem Thermografiesensor handeln. In einer Einzelmessung kann mit dem flächenhaften Prüfsensor 22 der Einzelabschnitt 10 des Bauteils 1 geprüft werden. Auf der Sensoreinheit 20 sind in Figur 1 nicht gezeigte Aktoren des Triangulations-Trackingsystems angebracht. In Figur 2 ebenfalls gezeigt ist die Basiseinheit 40 des Triangulations-Trackingsystems, in die die beabstandeten Kameras 42 und 44 integriert sind.

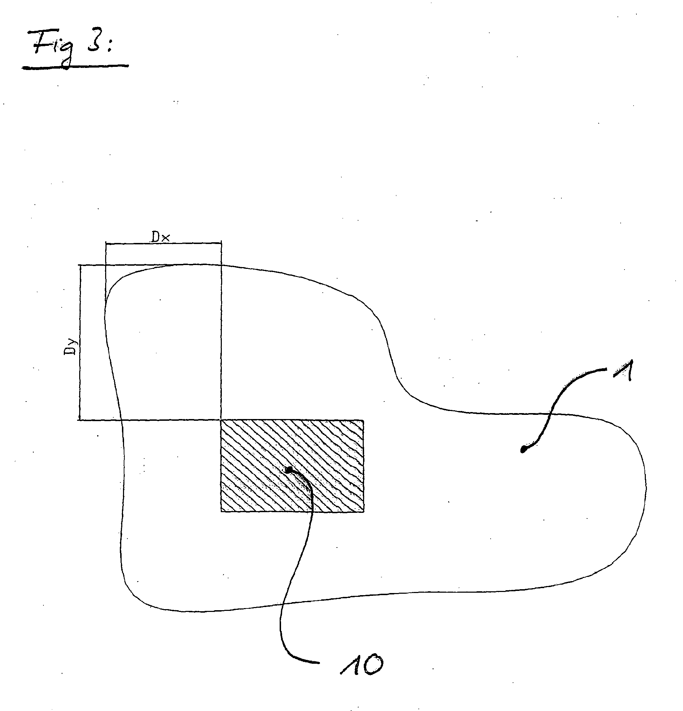

Figur 3 veranschaulicht den bei einer Einzelmessung mit einem flächenhaften Prüfsensor 22 geprüften Einzelabschnitt 10 eines Bauteils 1. Die Prüfergebnisse für den Einzelabschnitt 10 können nach dem erfindungsgemäßen Verfahren über die relativen Koordinaten Dx und Dy den zugehörigen Orten auf bzw. im Bauteil 1 zugeordnet werden.

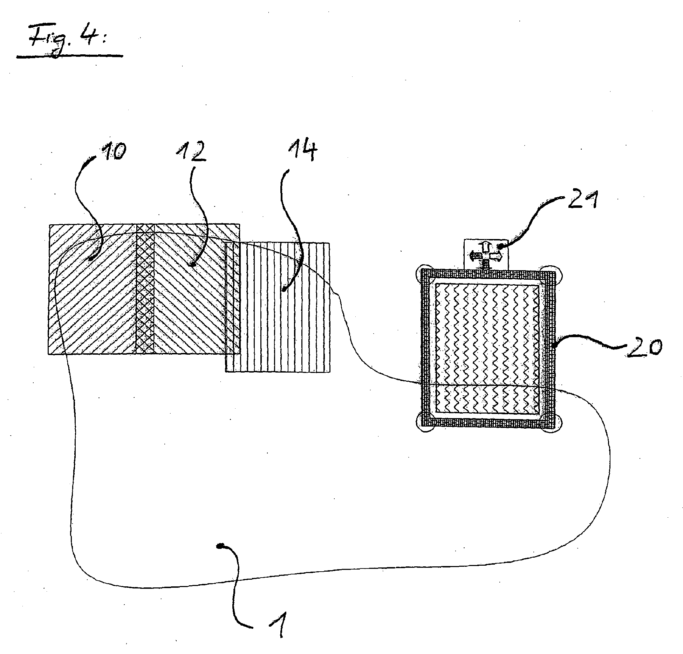

Figur 4 zeigt mehrere bei Einzelmessungen geprüfte Einzelabschnitte 10, 12, und 14 des Bauteils 1. Die Einzelabschnitte 10, 12 und 14 haben Überlappbereiche, die beim Zusammensetzen der Einzelmessungen zu einem Gesamt-Prüfergebnis eliminiert werden können. Im rechten Teil der Figur 4 ist eine schematische Darstellung einer Sensoreinheit 20 mit einer Navigationshilfe 21 gezeigt. Diese Navigationshilfe 21 zeigt auf einem Display mit Pfeilen an, in welche Richtung die Sensoreinheit 20 bewegt werden muß, damit die aktuelle Ist-Position mit der gewünschten Soll-Position zur Deckung gebracht werden kann.

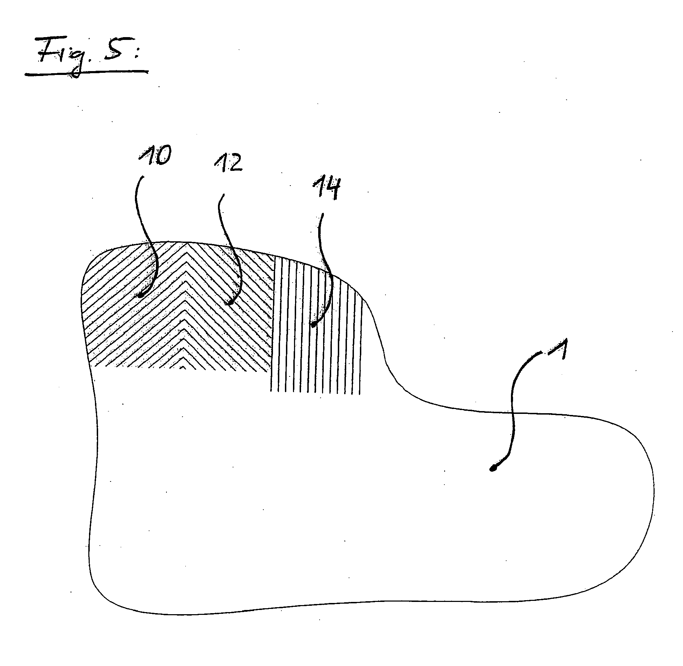

Figur 5 veranschaulicht die zu einem Gesamt-Prüfergebnis zusammengesetzten Einzelmessungen der Einzelabschnitte 10, 12 und 14. Die in Figur 4 gezeigten Überlappbereiche wurden beim Zusammensetzen eliminiert.

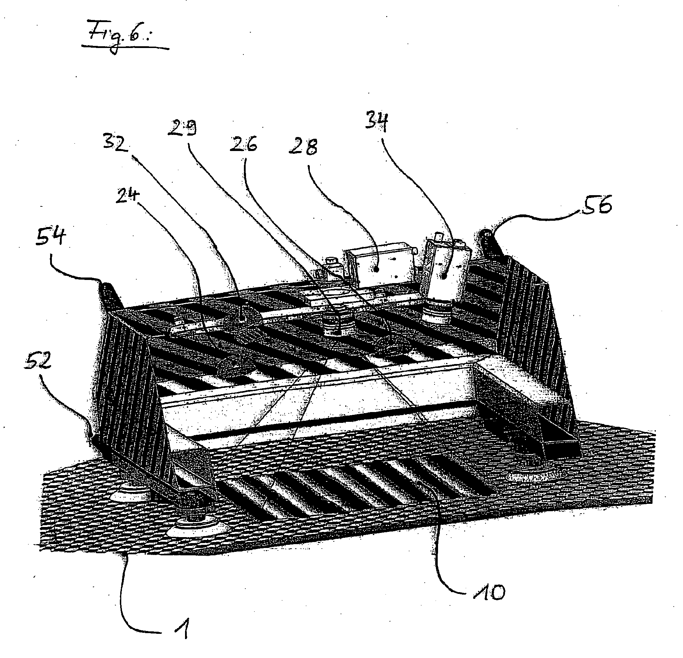

Figur 6 zeigt eine erfindungsgemäße Sensoreinheit 20 mit einem Scherografiesensor als Prüfsensor 22 und einem Streifenprojektionssensor als Digitalisierungssystem. In der Darstellung in Figur 6 wird der Einzelabschnitt 10 des Bauteils 1 geprüft. An der Sensoreinheit 20 sind die Aktoren 52, 54, 56 angebracht. Weitere Aktoren sind in Figur 6 nicht dargestellt. Die Belastungseinheit des Scherografiesensors wird durch Wärmestrahler 24 und 26 verwirklicht. Diese Wärmestrahler 24 und 26 sind in die Sensoreinheit 20 integriert. Weiterhin umfaßt der Scherografiesensor eine interferometrische Kamera 28 mit einem Objektiv 29. In die in Figur 6 dargestellte Sensoreinheit 20 ist ein Digitalisierungssystem in Form eines Streifenprojektionssensors integriert. Der Streifenprojektionssensor umfaßt den Streifenprojektor 32 und die Digitalisierungskamera 34.

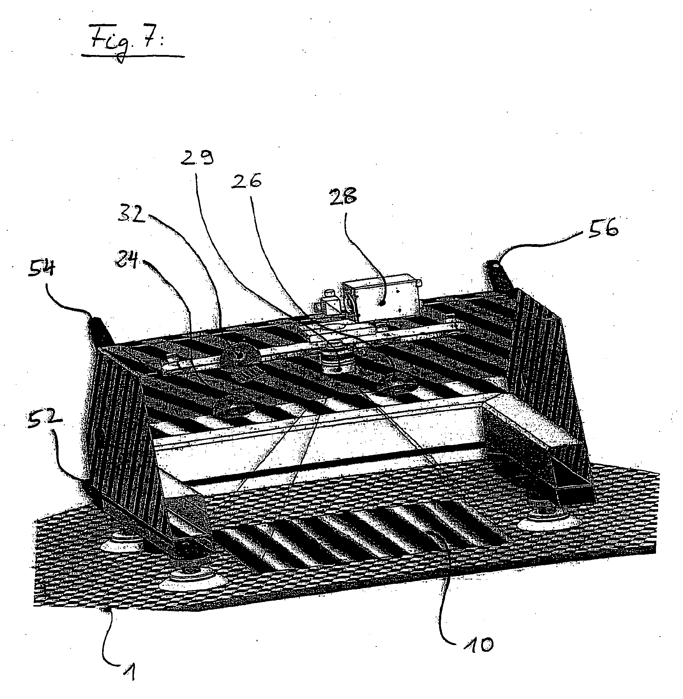

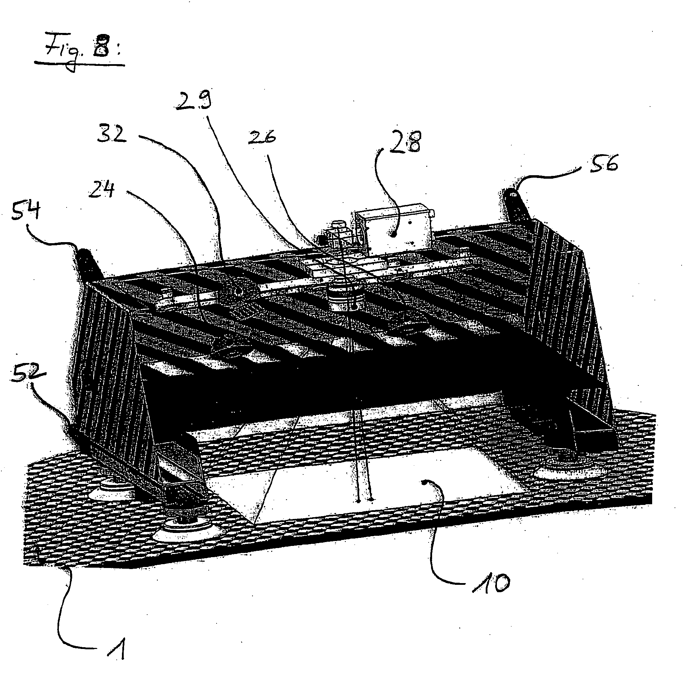

Figuren 7 und 8 zeigen ein weiters Ausführungsbeispiel einer erfindungsgemäßen Sensoreinheit 20. Auch diese Sensoreinheit umfaßt als Prüfsensor 22 einen Scherografiesensor und als Digitalisierungssystem einen Streifenprojektionssensor. Bei der in Figur 7 und 8 gezeigten Ausgestaltung verwenden Scherografiesensor und Streifenprojektionssensor die gleiche Kamera 28 mit dem vorgeschalteten Objektiv 29. Durch die Verwendung einer gemeinsamen Kamera für Scherografie- und Streifenprojektionssensor kann die Sensoreinheit 20 kostengünstiger hergestellt werden. Figur 7 zeigt die Sensoreinheit 20 im Digitalisierungsbetrieb, Figur 8 bei einer Scherografiemessung.

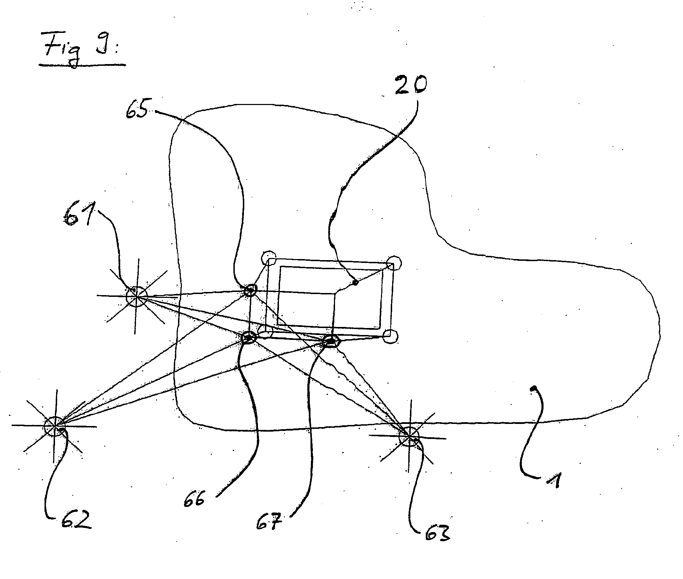

Figur 9 zeigt eine erfindungsgemäße Vorrichtung mit einem GPS-Trackingsystem. Die Transmitter 61, 62 und 63 sind voneinander beabstandet und raumfest stationiert. Die Position der Transmitter im raumfesten Koordinatensystem ist bekannt. Auf der Sensoreinheit 20 sind die Empfänger 65, 66 und 67 beabstandet angebracht. In der in Figur 9 gezeigten Situation empfängt jeder der Empfänger 65, 66 und 67 Signale von den drei Transmittern 61, 62 und 63. Auf dieser Grundlage können die Koordinaten aller drei Empfänger im raumfesten Koordinatensystem ermittelt werden. Aus den Raumkoordinaten der drei Empfänger 65, 66 und 67 kann die räumliche Lage der Sensoreinheit 20 ermittelt werden.

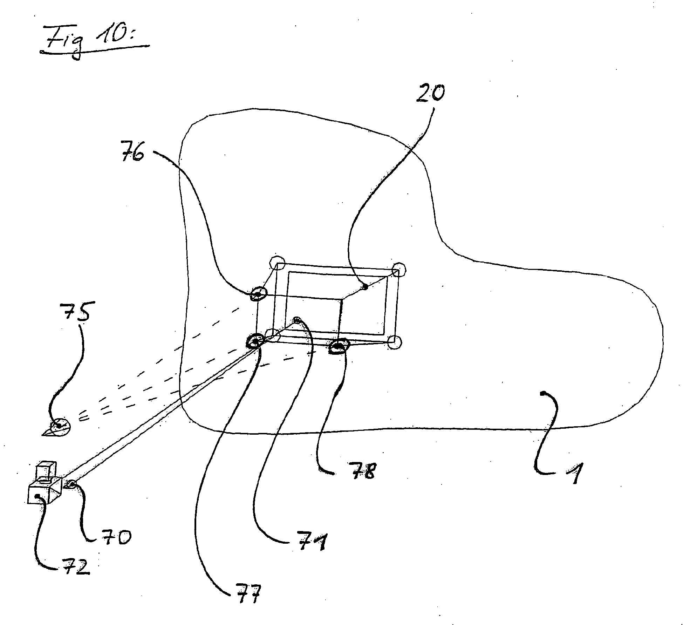

Figur 10 zeigt eine erfindungsgemäße Vorrichtung mit einem Laser-Trackingsystem. Der vom raumfesten Laser 70 ausgesendete Laserstrahl wird von dem an der Sensoreinheit 20 angebrachten Reflektor 71 in das raumfeste Interferometer 72 reflektiert und mit diesem ausgewertet. Dies erlaubt die Bestimmung der Änderung der Entfernung des Reflektors 71 beim Navigieren der Sensoreinheit 20 über das Bauteil 1. Beim Navigieren der Sensoreinheit 20 über das Bauteil 1 werden der Laser 70 und das Interferometer 72 derart nachgeführt, daß der Laser 70 den Reflektor 71 stets trifft und der Reflex stets vom Interferometer 72 erfaßt werden kann. Die zur Nachführung von Laser 70 und Interferometer 72 erforderlichen Verschwenkungswinkel werden vom Laser-Trackingsystem erfaßt. Aus der Entfernung des Reflektors 71 und aus den Verschwenkungswinkeln können die drei Raumkoordinaten des Reflektors 71 ermittelt werden. Das in Figur 10 gezeigte Laser-Trackingsystem umfaßt weiterhin eine Kameraeinheit 75 sowie die Aktoren 76, 77 und 78. Mit der Kameraeinheit 75 werden die Aktoren 76, 77 und 78 erfaßt. Die räumliche Lage der Aktoren 76, 77 und 78 wird im Wege der Triangulation ermittelt. Aus der räumlichen Lage des Reflektors 71 und der im Wege der Triangulation gewonnen räumlichen Lage der Aktoren 76, 77 und 78 kann die räumliche Lage der Sensoreinheit 20 ermittelt werden.

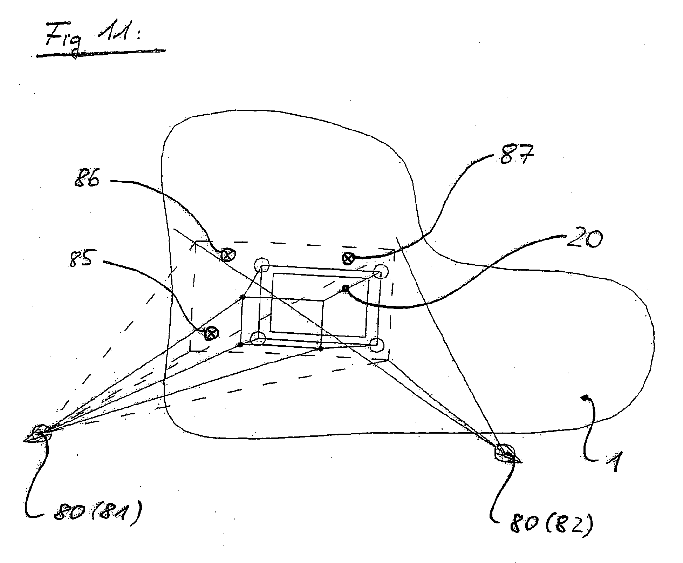

Figur 11 zeigt eine erfindungsgemäße Vorrichtung mit einem photogrammetrischen Trackingsystem. Das gezeigte photogrammetrische Trackingsystem umfaßt eine Kamera 80, die an zwei verschiednen Kamerapositionen 81 und 82 positioniert wird. Auf dem Bauteil 1 befinden sich drei raumfeste und voneinander beabstandete raumfesten Marken 85, 86 und 87, deren gegenseitiger Abstand bekannt ist. In beiden Kamerapositionen 81 und 82 befinden sich die raumfesten Marken 85, 86 und 87 im Meßfeld der Kamera 80. Die drei raumfesten Marken 85, 86 und 87 dienen der Kalibrierung des photogrammetrischen Trackingsystems. Sie liefern das Bezugskoordinatensystem für die photogrammetrische Auswertung der mit der Kamera aufgenommenen Bilder. Aus den Kamerapositionen 81 und 82 werden Bilder des Bauteils 1 mit der darauf befindlichen Sensoreinheit 20 aufgenommen. Nach bekannten photogrammetrischen Auswertungsverfahren wird daraus die räumliche Lage der Sensoreinheit 20 ermittelt.

Mit der Erfindung werden eine Reihe von Vorteilen erreicht. Die Position des Prüfsensors im raumfesten Koordinatensystem kann jederzeit berührungslos und ohne körperliche Verbindung zu einer raumfesten Basiseinheit erfaßt werden. Dadurch kann auch eine mechanische Verkopplung des Prüfsensors mit der Basiseinheit verzichtet werden. Dies erhöht die Beweglichkeit des Prüfsensors. Weiterhin kann simultan zur Prüfung des Bauteils eine Digitalisierung zur Gewinnung der 3D-Konturdaten erfolgen. Mittels mehrerer Positionsbestimmungen durch das Trackingsystem kann auch die Lage des zu prüfenden Bauteils im Raum ermittelt werden. Die Verknüpfung der mit dem erfindungsgemäßen Verfahren und der erfindungsgemäßen Vorrichtung erzielten Meßergebnisse ermöglicht es, die Prüfergebnisse den zugehörigen Orten am bzw. im Bauteil zuzuordnen und zu visualisieren. Damit ist die räumliche Lage von Strukturdefekten des Bauteils gut visualisierbar. Auf diese Weise können große und komplexe Bauteile, beispielsweise Flugzeugteile, Anlagenteile oder Fertigungsteile, mit dem erfindungsgemäßen Verfahren und der erfindungsgemäßen Vorrichtung besonders einfach und zuverlässig geprüft werden. Zudem kann mit der vorliegenden Erfindung die Prüfung von Bauteilen automatisiert werden.

## Patentansprüche

1. Verfahren zum Prüfen eines Bauteils (1), bei dem das Bauteil (1) mit einem Prüfsensor (22), dessen Position erfaßt wird, geprüft wird, bei dem die vom Prüfsensor (22) ermittelten Prüfergebnisse den zugehörigen Orten am bzw. im zu prüfenden Bauteil (1) zugeordnet werden und
bei dem die 3D-Konturdaten des Bauteils (1) mittels eines Digitalisierungssystems erfaßt werden.

2. Verfahren nach Anspruch 1, bei dem die erfaßten Positionen des Prüfsensors (22) dokumentiert und/oder abgespeichert werden.

3. Verfahren nach Anspruch 1 oder 2, bei dem die Position des Prüfsensors (22) mit einem Trackingsystem (40, 52, 54, 56,58, 58 / 61, 62, 63, 65, 66, 67 / 70, 71, 72, 75, 76, 77, 78 /80, 85, 86 ,87) erfaßt wird.

4. Verfahren nach dem vorhergehenden Anspruch, bei dem zur Erfassung der Position des Prüfsensors (22) ein Triangulations-Trackingsystem verwendet wird, das am Prüfsensor (22) angebrachte Marken (52, 54, 56, 58) und eine Basiseinheit (40) mit Sensoren (42, 44) umfaßt, wobei zur Erfassung der Position des Prüfsensors (22) die Marken (52, 54, 56, 58) mit den Sensoren (42, 44) der Basiseinheit (40) detektiert werden.

5. Verfahren nach dem vorhergehenden Anspruch, bei dem Aktoren (52, 54, 56, 58) als Marken verwendet werden, und zur Erfassung der Position des Prüfsensors von den am Prüfsensor angebrachten Aktoren (52, 54, 56 , 58) Signale ausgesendet werden, die von den Sensoren (42, 44) der Basiseinheit empfangen werden.

6. Verfahren nach Anspruch 3, bei dem als Trackingsystem ein GPS-Trackingsystem (61, 62, 63, 65, 66, 67) verwendet wird.

7. Verfahren nach Anspruch 3, bei dem als Trackingsystem ein Laser-Trackingsystem (70, 71, 72, 75, 76, 77, 78) verwendet wird.

8. Verfahren nach Anspruch 3, bei dem als Trackingsystem ein photogrammetrisches Trackingsystem (80, 85, 86, 87) verwendet wird.

9. Verfahren nach einem der Ansprüche 3 bis 8, bei dem das Trackingsystem zum Positionieren und/oder Navigieren des Prüfsensors (22) auf dem Bauteil (1) verwendet wird.

10. Verfahren nach einem der vorhergehenden Ansprüche, bei dem zur Prüfung des Bauteils (1) mehrere Einzelmessungen mit dem Prüfsensor (22) vorgenommen werden, wobei der Prüfsensor (22) für die jeweilige Einzelmessung positioniert wird und an den jeweiligen Positionen eine Einzelmessung durchgeführt wird.

11. Verfahren nach einem der vorhergehenden Ansprüche, bei dem das Bauteil (1) mit einem punktuellen Prüfsensor (22), insbesondere einem Ultraschallsensor, geprüft wird.

12. Verfahren nach einem der Ansprüche 1 bis 10, bei dem das Bauteil (1) mit einem flächenhaften Prüfsensor (22), insbesondere einem Thermografie- oder Scherografiesensor, geprüft wird, wobei der flächenhafte Prüfsensor (22) bei einer Einzelmessung einen Einzelabschnitt (10, 12, 14) des Bauteils (1) prüft.

13. Verfahren nach einem der vorhergehenden Ansprüche, bei dem die 3D-Konturdaten des Bauteils (1) eingelesen werden, und bei dem die räumliche Lage des Bauteils (1) aus mehreren vom Trackingsystem erfaßten Positionen ermittelt wird.

14. Verfahren nach einem der vorhergehenden Ansprüche, bei dem die digitale Erfassung der 3D-Konturdaten im Wege des Streifenprojektionsverfahrens erfolgt.

15. Verfahren nach dem vorhergehenden Anspruch, bei dem die Prüfung des Bauteils (1) im Wege des Scherografieverfahrens vorgenommen wird, wobei für Scherografie- und Streifenprojektionsverfahren dieselbe Kamera verwendet wird.

16. Verfahren nach einem der Ansprüche 9 bis 14, bei dem die Prüfergebnisse von in Einzelmessungen geprüften Einzelabschnitten (10, 12, 14) des Bauteils (1) unter Eliminierung von Überlappbereichen zu einem Gesamt-Prüfergebnis zusammengesetzt werden.

17. Verfahren nach einem der vorhergehenden Ansprüche, bei dem die Prüfergebnisse in einer Abbildung des Bauteils (1) visualisiert werden.

18. Vorrichtung zur Prüfung eines Bauteils, mit einer Sensoreinheit (20) und einem Trackingsystem (40, 52, 54, 56, 58/61, 62, 63, 65, 66, 67/70, 71, 72, 75, 76, 77, 78 / 80, 85, 86, 87) zur Erfassung der Position der Sensoreinheit (20),
**dadurch gekennzeichnet,**
**daß** die Sensoreinheit (20) einen Prüfsensor (22) zur Prüfung des Bauteils (1) umfaßt
und **daß** die Vorrichtung ein Digitalisierungssystem (32, 34) zur Erfassung der 3D-Konturdaten des Bauteils (1) aufweist.

19. Vorrichtung nach dem vorhergehenden Anspruch, bei der das Trackingsystem als Triangulations-Trackingsystem (40, 52, 54, 56, 58) ausgebildet ist, welches eine Basiseinheit (40) und mit der Sensoreinheit (20) fest verbundene Marken (52, 54, 56, 58) aufweist, wobei die Basiseinheit (40) mit Mitteln (42, 44) zum Detektieren der Marken (52, 54, 56, 58) ausgestattet ist.

20. Vorrichtung nach dem vorhergehenden Anspruch, wobei die Marken als Aktoren (52, 54, 56, 58) ausgestaltet sind, wobei die Aktoren (52, 54, 56, 58) mit Mitteln zum Aussenden von Signalen und die Basiseinheit (40) mit Mitteln (42, 44) zum Empfangen der von den Aktoren (52, 54, 56, 58) ausgesendeten Signale ausgestattet sind.

21. Vorrichtung nach Anspruch 18, bei der das Trackingsystem als GPS-Trackingsystem (61, 62, 63, 65, 66, 67) ausgebildet ist.

22. Vorrichtung nach Anspruch 18, bei der das Trackingsystem als Laser-Trackingsystem (70, 71, 72, 75, 76, 77, 78) ausgebildet ist.

23. Vorrichtung nach Anspruch 18, bei dem das Trackingsystem als photogrammetrisches Trackingsystem (80, 85, 86, 87) ausgebildet ist.

24. Vorrichtung nach einen der Ansprüche 18 bis 23, wobei der Prüfsensor (22) als Ultraschallsensor, Thermografiesensor oder als interferometrischer Sensor, insbesondere als Scherografiesensor oder als ESPI (Electronic Speckle Pattern Interferometry)-Sensor, ausgestaltet ist.

25. Vorrichtung nach dem vorhergehenden Anspruch mit einem Scherografiesensor, wobei die Belastungseinheit (24, 26) des Scherografiesensors in die Sensoreinheit (20) integriert ist.

26. Vorrichtung nach einem der Ansprüche 18 bis 25, wobei das Digitalisierungssystem (32, 34) in die Sensoreinheit (20) integriert ist.

27. Vorrichtung nach einem der Ansprüche 18 bis 26, wobei das Digitalisierungssystem (32, 34) als Streifenprojektionssensor, umfassend einen Streifenprojektor (34) und mindestens eine Kamera (32), ausgebildet ist.

28. Vorrichtung nach einem der Ansprüche 18 bis 27, bei der die Sensoreinheit (20) eine mit dem Trackingsystem gekoppelte Navigationshilfe (21) zum Navigieren der Sensoreinheit (20) über die Oberfläche des Bauteils (1) aufweist.

29. Vorrichtung nach einem der Ansprüche 18 bis 28, wobei die Vorrichtung eine Datenverarbeitungseinheit aufweist, die die Prüfergebnisse des Prüfsensors (22) den 3D-Konturdaten des Bauteils (1) zuordnet, Prüfergebnisse von Einzelabschnitten (10, 12, 14) des Bauteils (1) zu einem Gesamt-Prüfergebnis zusammensetzt und/oder das Prüfergebnis visualisiert.
